# EUROPEAN PATENT SPECIFICATION

(11) **EP 4 127 590 B1**
(45) Date of publication and mention of the grant of the patent: **19.08.2026**
(21) Application number: 21714003.7
(22) Date of filing: 19.03.2021
(51) Int. Cl.: F28D 9/00

(54) **FLAT PLATE HEAT EXCHANGER**
FLACHPLATTENWÄRMETAUSCHER
ÉCHANGEUR DE CHALEUR À PLAQUES PLATES

(30) Priority: 23.03.2020 GB 202004204
(43) Date of publication of application: 08.02.2023
(73) Proprietor: Reaction Engines Limited, Oxfordshire OX14 3DB (GB)
(72) Inventor: VOSS, Garry, Abingdon Oxon, Oxfordshire OX14 3DB (GB); GILLINGHAM, Adam, Abingdon Oxon, Oxfordshire OX14 3DB (GB); SCRIMSHAW, Paul, Abingdon Oxon, Oxfordshire OX14 3DB (GB); EATON, Bradley, Abingdon Oxon, Oxfordshire OX14 3DB (GB); JACKSON, Adam, Abingdon Oxon, Oxfordshire OX14 3DB (GB)
(74) Representative: Ingrassia, Fisher & Lorenz UK Ltd.
(86) International application number: PCT/GB2021/050691
(87) International publication number: WO 2021/191590

(56) References cited:
- EP-A1- 1 189 009
- EP-A2- 2 236 969
- EP-A2- 3 608 620
- WO-A1-2004/099696
- DE-A1- 102010 042 068

## Description

### Field

The present disclosure relates to flat plate heat exchangers such as of the type which can be used in aerospace applications, automotive applications, industrial applications or similar. The disclosure also relates to vehicles comprising such heat exchangers and to a method of manufacturing such a heat exchanger. Standard flat plate heat exchanger modules as defined in the preamble of claim 1 are known from EP 3 608 620.

### Background

Flat plate heat exchangers are well known and usually consist of a stack of heat exchanger plates mounted within a frame. Heat exchangers can be designed to provide counter, cross or co-current fluid flow paths for hot and cold fluid streams. The heat exchanger plates can have fluid flow channels provided in the surface of the plate, with the cold and hot streams in fluid isolation from one another. The use of channels can provide a high heat transfer coefficient as they increase the available surface area for heat transfer.

Traditionally, the plates are joined to the fluid inlet and outlet manifolds either by the use of gasket seals or alternatives such as brazing and laser welding. It is relatively easy to increase or reduce the heat transfer capacity of the heat exchanger by adding additional plates or removing plates.

An advantage of flat plate heat exchangers is that the high overall heat transfer coefficient and general compact configuration provide the same heat transfer capacity as a shell and tube heat exchanger which is as much as five times the size. This is useful for applications such as turbine engines, where a compact and lightweight heat exchanger is desirable for heating compressed gases. However, a disadvantage of plate heat exchangers is that they are not suitable for use when there is a large temperature difference between the hot and cold ends of the heat exchanger, due to thermal expansion of the component parts, which exerts stress on joints and connections, leading to cracks or leaks.

During operation, the metal components within the heat exchanger module which are hotter will tend to expand relative to cooler parts of the module which will tend to contract. The stack of plates can buckle or distort, as one side of the heat exchanger module will tend to contract whilst the other side will expand. This thermal expansion places strain on the metal plates and on any connection points with other components. The difference in expansion and contraction is more severe if the temperature gradient is higher. Metals can enter a plastic regime when they are subjected to high levels of stress and strain. In the plastic regime the metal will deform to maintain the connection points. Once the levels of strain in the plastic regime have exceeded the ultimate strength of the material, the metal will fail and fracture. This leads to leaks and mixing of the fluid streams.

One method of reducing the thermally induced stresses experienced in a heat exchanger module is to reduce the temperature gradient, which can be achieved by reducing the temperature difference between the hot and cold fluid streams. This is not always desirable or practical. Another way to reduce the temperature gradient is to increase the channel length, although in practice, there will be design constraints on how long the channel length can be for most applications. Increasing the channel length tends to lead to a larger heat exchanger. The size of the fluid inlets and outlets can be changed, but again other design constraints may preclude this.

When the heat exchanger is more compact, the effects of thermal expansion are greater, as the thermal gradients are relatively high. This can quickly lead to failure due to the stresses placed on the materials during thermal cycling. Failure of the heat exchanger within an engine impacts the safety of the engine.

The use of diffusion bonding to manufacture heat exchangers is disclosed in US9,834,441 to George et al. Diffusion bonding is used to create a fluid seal between adjacent heat exchanger plates. The technique is more cost effective than techniques previously used to fix the heat exchanger plates together, such as precision welding.

US 8,157,000 to Johnston describes a heat exchanger core with fluid flow channels etched into each of the heat exchanger plates, where the heat exchanger plates are bonded together to form a heat exchanger core. It is mentioned that if the cores are arranged linearly, there is a potential risk that the cores will displace from their normal relationship due to bending (which is likened to a banana) under thermal expansion and contraction effects, and the end faces of the cores will no longer be in their original arrangement. This can create coupling problems. The solution proposed in this patent is to change the arrangement of the cores. Cores of different lengths are coupled such that the bending of one core compensates in the opposite direction to the adjacent core, and the extreme ends of the cores are maintained in substantially the original location. This solution involves the alignment of the cores in a linear arrangement, which is not suitable for all applications. The present disclosure seeks to alleviate, at least to a certain degree, the problems and/or address at least to a certain extent, the difficulties associated with the prior art. In particular, the present disclosure relates to accommodating large thermal strains.

### Summary

According to a first aspect of the present disclosure there is provided a flat plate heat exchanger module as defined in claim 1.

The use of at least one elongated aperture throughout the stack of heat exchanger plates minimises the overall effect of the expansion and contraction of the metal due to exposure to high temperature gradients. The elongated aperture may be in the form of a slot or a slit, preferably the aperture is longer than it is wide. Preferably, the elongated aperture is linear, however, the elongated aperture could also be curved, oscillating, or zig-zagged, or other suitable form. The elongated aperture provides space within the stack for the expansion and contraction of the metal, with the advantage that distortion of the stack of plates is reduced and limited, which in turn reduces the strain on connection points, such as at the inlet and outlet ports. The elongated aperture also increases the flexibility of the plate. This reduces metal fatigue and improves the life of the heat exchanger, enabling the heat exchanger to operate without failure under higher thermal gradients than would usually be possible. The thermal gradients which are possible with the present invention exceed 10K/mm.

The elongated aperture may extend across the surface of the heat exchanger plate in a lateral direction. The lateral direction may extend in a direction which is parallel to the primary direction of flow of the heatant fluid. The elongated apertures are arranged in fluid isolation from the first and second fluid flow path. The elongated apertures can be located in the channel free portions of the heat exchanger plate, such that the elongated apertures do not intercept the flow path of the fluid. In addition to the elongated aperture, at least one fluid flow channel can extend in a lateral direction across the surface of the heat exchanger plate, directing a first or second fluid from the fluid inlet to the fluid outlet.

The heat exchanger plates, end plates and spacer plates may be of any shape; including square, rectangular, circular, oval or hexagonal.

Optionally, at least one of the heat exchanger plates can comprise at least two elongated apertures which extend in a lateral direction across the surface of the heat exchanger plate, where the elongated apertures are positioned between at least two fluid flow channels. The elongated apertures may be located in channel-free portions of the plate, i.e. the elongated apertures do not intercept the fluid channels. Preferably, at least one of the heat exchanger plates comprises at least three elongated apertures which extend in a lateral direction across the surface of the heat exchanger plate. The lateral direction may be normal to a first edge of the heat exchanger plate. The heat exchanger plate may comprise a plurality of elongated apertures which extend in a lateral direction across the surface of the heat exchanger plate. Where the heat exchanger plate comprises at least two elongated apertures, they are preferably arranged at regularly spaced intervals across the surface of the heat exchanger plate.

The heat exchanger plates may optionally be arranged between other plates, which may not have channels across their surface. These plates could comprise spacer plates, intermediate end plates and end plates, for example. The flat plate heat exchanger module may comprise at least one spacer plate, where the spacer plate can comprise at least one elongated aperture which extends in a second, longitudinal direction across the surface of the plate. The longitudinal direction may be parallel to the first edge of the spacer plate.

The longitudinal direction may also be defined as being perpendicular to the primary direction of flow of the heatant fluid. Preferably, the spacer plate comprises at least two elongated apertures which extend in a longitudinal direction across the surface of the plate. The spacer plate may comprise a metal foil sheet or could be a metal plate.

The flat plate heat exchanger module may comprise at least one intermediate end plate, where the intermediate end plate can comprise at least one elongated aperture which extends in a first, lateral direction across the surface of the plate. Preferably, the intermediate end plate comprises at least three elongated apertures which extend in a lateral direction across the surface of the plate. The intermediate end plate may comprise a metal foil sheet or could be a metal plate. The intermediate end plate may assist with providing a pressure-tight seal for the fluid in the matrix foils.

The flat plate heat exchanger module may be a large industrial heat exchanger, or may be a small compact heat exchanger, or a microchannel heat exchanger. Fluid flow channels in a typical heat exchanger may have a width in the range of 1-10mm, with a depth of 0.5 - 5mm, where the depth is measured at the deepest point in the channel. The channels may be generally semi-circular in cross-section or trough shaped. The length of the channels is typically over 50cm.

Microchannel heat exchangers have microchannels which may also be generally semi-circular in cross-section or trough-shaped. The microchannels may have a width and depth of less than 1mm. The microchannels can be between 50 to 200 micrometres wide, preferably 100 micrometres wide. Microchannels can be between 25 and 100 micrometres deep, preferably 50 micrometres deep, where the depth is measured at the deepest point in the channel. Microchannels may be between 10mm and 100mm long, preferably between 25mm and 75mm, optionally about 50mm long. Optionally, microchannels can be separated by a separation "fin" which may be 10-100 micrometres wide, more preferably about 50 micrometres wide.

The end plates are the outermost plates and encase the module. They provide a pressure tight seal to the stack of plates.

The at least one elongated aperture of each adjacent plate is aligned with the at least one elongated aperture of an adjacent plate in a stack of plates such that at least one elongated aperture extends through a stack of multiple plates. The alignment of the elongated aperture can be between any one or all of the heat exchanger plates, spacer plate, intermediate end plate or end plate. The alignment of the elongated aperture can apply to elongated apertures which extend in a lateral or longitudinal direction.

Preferably, the elongated apertures extend across at least 80% of the extent of the plate (heat exchanger plate, spacer plate, intermediate end plate or end plate) in a lateral or longitudinal direction. The elongated apertures which extend in a longitudinal direction may extend across the entire extent, e.g. the length of the plate (100%).

The elongated apertures could be non-linear, provided they are sufficiently elongated to provide strain relief to the heat exchanger plate and/ or spacer plate and do not intercept the fluid flow paths created by the channels. The elongated apertures may be in the form of slots or slits. The elongated apertures do not intersect the fluid flow paths.

The provision of elongated apertures in both a first and second direction relative to the principle direction of the flow of the heatant fluid allows compensation for thermal expansion and contraction in both directions. These two directions can be referred to as lateral and longitudinal directions across the surface of the heat exchanger plate.

Each heat exchanger plate may be provided with more than one elongated aperture, extending in a lateral or longitudinal direction across the surface of the plate. A single plate may have elongated apertures extending in both the lateral and longitudinal direction. Alternatively, at least one heat exchanger plate comprises at least two elongated apertures extending in a lateral direction, more preferably at least three, optionally at least five, optionally at least ten elongated apertures, extending in a lateral direction. The number of elongated apertures required will depend on the width of the plate, and the temperature gradients that the plate is exposed to during use.

Preferably at least one spacer plate comprises at least two elongated apertures extending in a longitudinal direction. Optionally, at least one intermediate end plate may comprise at least two elongated apertures extending in a lateral direction.

The elongated apertures are positioned and designed to compensate for the thermal expansion of the metal plates in the lateral and longitudinal directions. As the metal heat exchanger plates, spacer plates, intermediate end plates, and end plates are exposed to heat from the hot fluid stream, the metal will expand. There will also be contraction of the metal plates in areas where the metal is cooled. The effect of this expansion is exacerbated in a stack of metal plates. The elongated apertures provide gaps within which the metal can expand or distort, without placing pressure on the surrounding elements of the heat exchanger. In this way, the elongated apertures in a lateral direction provide strain relief to the heat exchanger plate, particularly at the connection points with the fluid inlet and outlet ports. The elongated aperture of the spacer plate provides a gap within which the metal can expand or distort in a second direction.

The flat plate heat exchanger module may comprise a plurality of diffusion bonded heat exchanger plates. Diffusion bonding fuses the heat exchanger plates (and optional spacer plates) together but retains the fluid channels and elongated apertures throughout. The diffusion bonding process effectively seals the passages between the fluid circuits with a solid metal barrier, isolating and segregating the fluid flow channels. Diffusion bonding enables the bonded plates and/or heat exchanger plates to withstand high operating pressures and temperatures.

Preferably, the flat plate heat exchanger module comprises at least two diffusion bonded heat exchanger plates positioned between two end plates. The flat plate heat exchanger module may optionally comprise one or more intermediate end plates. The heat exchanger module may further comprise one or more spacer plates. The spacer plates and/or the intermediate end plates may comprise a metal foil or a thin metal plate. The flat plate heat exchanger module may comprise at least two heat exchanger plates and one or more spacer plates, and/or intermediate end plates positioned within two end plates.

The heat exchanger plates, spacer plates, intermediate end plates or end plates can comprise a header portion with inlet and outlet ports for a first fluid and second fluid. Where the heat exchanger plates, spacer plates, intermediate end plates or end plates comprise a header portion, the header portion may be etched to provide inlet and outlet ports for the first and second fluid.

The header portion provides the outer wall for the fluid inlet and outlet ports. At least one edge of the header portion of the heat exchanger plate, spacer plate, intermediate end plate or end plate may be non-linear and may be corrugated, ridged, ribbed, serrated or castellated, such that the shape of the edge of the foil corresponds with the shape and positions of the inlet and outlet ports.

Advantageously, the thermally induced stress and strain on the metal components can be reduced by removing excess material from the vicinity of the inlet and outlet ports. This reduces the thermal mass, and also increases the flexibility of the material around the inlet and outlet ports, improving the ability of the metal to move in accordance with the expansion and contraction of the heat exchanger plates and connectors.

The flat plate heat exchanger module may comprise headers for the first and second fluids, which may be arranged in fluid connection with the inlet and outlet ports for the first and second fluid. The inlet and outlet ports may have any shape. Preferably, the inlet and/or outlet ports have a circular shape, optionally, the inlet and/or outlet ports may have a shape which is tapered at one end, i.e. a tear-drop shape. Alternatively, the inlet and/or outlet ports may be oval, or square with rounded edges. The inlet ports may have a different shape to that of the outlet ports.

The heat exchanger plates, spacer plates, intermediate end plates and/or end plates may comprise a metal, preferably comprising aluminium, a nickel-based alloy, a cobalt-based alloy, copper, titanium or stainless steel. Preferably, the heat exchanger plates comprise SS316 stainless steel. This grade of stainless steel is advantageously very damage tolerant and therefore the use of SS316 reduces the risk of failure or fast fracture.

According to a further aspect of the present disclosure, there is also provided a method of manufacturing a flat plate heat exchanger module comprising the following steps:
- providing at least one fluid flow channel on the surface of at least one metal foil sheet, where the metal foil sheet forms a heat exchanger plate;
- stacking a plurality of heat exchanger plates adjacent to one another; where the plurality of heat exchanger plates provide a first fluid flow path for a first fluid and a second fluid flow path for a second fluid, where each of the fluid flow paths are in fluid isolation from one another;
- providing at least one inlet and at least one outlet for the first fluid;
- providing at least one inlet and at least one outlet for the second fluid;
- arranging the plurality of diffusion bonded heat exchanger plates between two end plates, to form a module;
- diffusion bonding a plurality of heat exchanger plates together;
- providing at least one elongated aperture extending in a lateral direction across the surface of at least one heat exchanger plate, where the elongated aperture is in fluid isolation from the first and second fluid flow paths.

The method may further comprise a step of providing at least one spacer plate which is stacked adjacent to the heat exchanger plates, where at least one elongated aperture is etched into the spacer plate. The spacer plate may comprise a metal plate or a metal foil sheet. The spacer plate provides sacrificial material for removal in subsequent machining operations.

The method step of providing at least one elongated aperture may be achieved by one or more of electrical discharge machining (EDM), conventional machining, wire EDM, water jet, laser cutting or some combination of these techniques.

At least one elongated aperture may be etched into the spacer plate. The elongated aperture may be etched in a lateral or a longitudinal direction across the surface of the spacer plate. The lateral direction may extend in a direction which is normal to a first edge of the spacer plate. The lateral direction may extend in a direction which is parallel to the primary direction of flow of the heatant fluid. The method may comprise a step of etching at least one elongated lateral aperture in the spacer plate. The longitudinal direction may extend in a direction which is parallel to a first edge of the spacer plate. The longitudinal direction may extend in a direction which is perpendicular to the primary direction of flow of the heatant fluid. Preferably, the method comprises etching at least two elongated longitudinal apertures in the spacer plate.

Preferably, the method of manufacturing includes the use of electrical discharge machining to extend the length of at least one elongated aperture in the spacer plate after the diffusion bonding step. Alternatively, the length of at least one elongated aperture in the spacer plate can be extended by alternative methods of material removal, such as drilling, laser or water jet cutting after the diffusion bonding step. Optionally, the length and/or width of at least one elongated aperture which extends in a longitudinal direction across the surface of the plate may be extended by use of one of electrical discharge machining, drilling, laser or water jet cutting after the diffusion bonding step.

By extending the length of the elongated aperture after the heat exchanger plates and spacer plates have been diffusion bonded to one another, the risk of damage to the plates is reduced during the assembly stage. The heat exchanger plates and spacer plates may comprise a thin metal foil, they can be fragile to handle during assembly, particularly when the foil has been etched to provide multiple apertures. The spacer plates may be etched with pilot holes and an initial elongated aperture. After assembly, the pilot holes can be used to continue the etching or material removal process. The pilot holes allow alignment with the initial elongated aperture. The initial elongated aperture can then be accurately extended in length.

The method of manufacturing a flat plate heat exchanger module can include a step of aligning at least two elongated apertures in a stack of plates before the plates are diffusion bonded to each other. The alignment step may apply to at least one elongated aperture extending in a lateral direction, which may extend in a direction which is normal to a first edge of the plates. This ensures that the elongated apertures of the individual sheets are aligned and correspond with one another in a stack of plates or heat exchanger plates.

The method of manufacturing a flat plate heat exchanger module may include a step of aligning a stack of heat exchanger plates with one or more intermediate end plates. The method may further include a step of aligning a stack of heat exchanger plates with one or more spacer plates. The spacer plates and/or the intermediate end plates may comprise a metal foil or a thin metal plate. The method of manufacturing a flat plate heat exchanger module can include a step of aligning a stack of heat exchanger plates with one or more spacer plates and/or intermediate end plates within two end plates.

Where the heat exchanger plates, spacer plates, intermediate end plates or end plates comprise a header portion, the header portion of the plates may be etched to provide inlet and outlet ports for the first and second fluid. The method of manufacturing the module may include steps of removing excess material from header portion surrounding the inlet and outlet ports, such that the edge of the header portion is corrugated, ridged, ribbed, serrated or castellated to correspond with the shape of the inlet and outlet ports.

The removal of excess material advantageously results in greater flexibility for the connection points to expand and contract with the rest of the heat exchanger plate, and a lower risk of leaks. As a large portion of the thermal mass has been removed, the thermal stresses experienced by the metal plate is reduced when the plate is exposed to high temperature gradients. The connection points for the inlet and outlet ports are more flexible as there is less material around the inlet and outlet ports.

The inlet and outlet ports may be fluidly connected to the manifolds for the first and second fluid. The manifolds may also be referred to as headers or collectors.

At least two heat exchanger plates may be diffusion bonded together. Preferably, at least one spacer plate can be diffusion bonded to at least two heat exchanger plates. Optionally, at least one intermediate end plate is diffusion bonded with at least one spacer plate and at least two heat exchanger plates.

The heat exchanger plates may be arranged such that at least two heat exchanger plates comprising elongated apertures which extend in a lateral direction parallel to the plane of the heat exchanger plate are positioned adjacent to each other, and these sheets may be diffusion bonded together. At least one intermediate end plate may be positioned adjacent to one or more spacer plates. The method of manufacturing may comprise stacking at least two heat exchanger plates adjacent to each other, where each plate comprises at least one elongated aperture extending in a lateral direction across the surface of the heat exchanger plate, aligning the apertures of the heat exchanger plates, and diffusion bonding the heat exchanger plates together. The step of diffusion bonding provides a leak-tight join between adjacent plates thus creating fluid channels through the heat exchanger which can withstand high operating pressures and temperatures.

The elongated apertures minimise the effects of thermal expansion on the heat exchanger module. Without the elongated apertures, thermal expansion of the metal foils can generate large strains within the heat exchanger matrix, and on the connections between the inlet and outlet ports as the expansion of the foil can result in a movement in the exact position of the ports. This expansion of foil exerts pressure on connection points to the module; for example, the connections with inlet and outlet supply collectors or other pipework. In addition, the expansion can result in the distortion of the heat exchanger plates such that the heat exchanger plates expand outwards, thus changing the shape of the heat exchanger module. This distortion has an impact upon all connected components, for example, for the other components within an engine, placing all connecting points under stress. The greater the temperature gradient, the greater the distortion due to expansion will be. The elongated apertures can reduce the impact of the contraction and expansion on the module.

### Brief Description of the Drawings

The present disclosure may be carried out in various ways and embodiments of the disclosure will now be described by way of example with reference to the accompanying drawings, in which:
Figure 1 is an expanded view of an example of a stack of heat exchanger plates, comprising a plurality of heat exchanger plates arranged between two end plates.
Figure 2 is an isometric view of one example of a heat exchanger module comprising a stack of heat exchanger plates, with an inlet and outlet manifold for hot and cold fluids, respectively.
Figure 3 is a schematic plan view of an exemplary individual heat exchanger plate, comprising three elongated apertures extending in a lateral direction across the plate, where the elongated apertures are adjacent to fluid flow channels.
Figure 4 is a schematic plan view of an exemplary individual intermediate end plate, comprising three elongated apertures extending in a lateral direction across the surface of the plate.
Figure 5 is a schematic plan view of an exemplary individual spacer plate, comprising at least two elongated apertures extending in a longitudinal direction across the surface of the plate. Figure 5 does not depict the invention.
Figure 6 is a schematic plan view of an exemplary individual spacer plate, comprising at least two partially etched elongated apertures extending in a longitudinal direction across the surface of the plate. Figure 6 does not depict the invention.
Figure 7 is a cross-section of an exemplary stack of plates, where a stack of intermediate end plates comprises at least two elongated apertures extending in a lateral direction, and at least two spacer plates comprise at least one elongated aperture extending in a longitudinal direction.
Figure 8 is an isometric view of one end of the stack of plates of Figure 7 before the aperture has been created in the longitudinal direction.

### Detailed Description

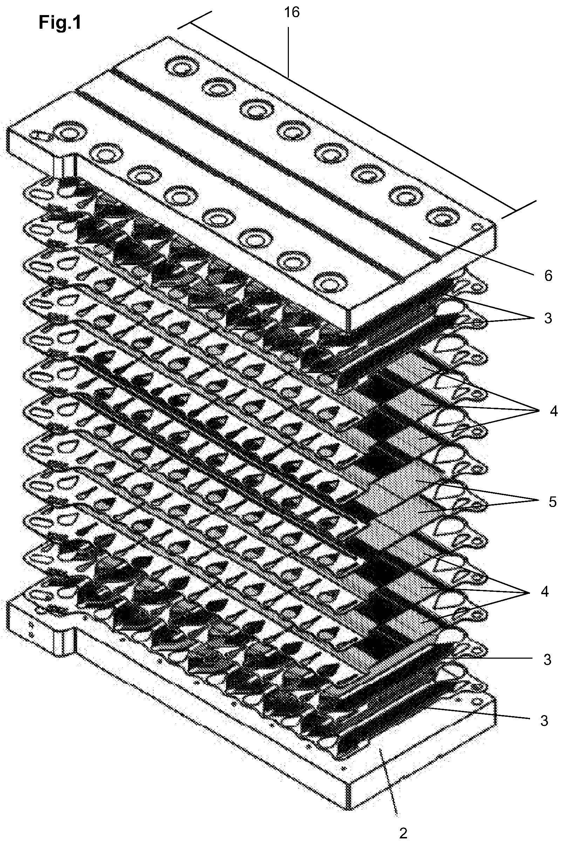

Figure 1 illustrates an example of a stack of heat exchanger plates for a heat exchanger module 1, wherein each heat exchanger plate comprises a metal foil sheet. As illustrated in Figure 1, from the bottom to the top, the stack comprises a first end plate 2, two heat exchanger plates 3, three intermediate end plates 4 two spacer plates 5, three intermediate end plates 4, two heat exchanger plates 3 and a second end plate 6. In Figure 1, the plates are generally rectangular in shape, however, the plates could be of any shape. The number and types of plate may be chosen depending on the application and performance requirements of the module. Typically, between 1000 and 3000 heat exchanger plates can be utilised in a flat plate heat exchanger.

In the example illustrated in Figure 1, intermediate end plates 4 are included in the stack of plates. The intermediate end plates 4 can comprise elongated apertures 15 which extend in a lateral direction across the surface of the plate.

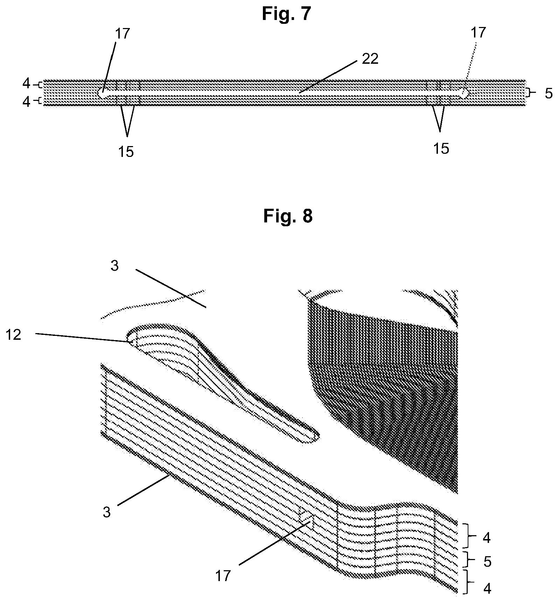

In the illustrated example, two spacer plates 5 are provided, where each spacer plate comprises two elongated apertures 17 which extend in a second, longitudinal direction across the header portions of the plate. In addition, there is an elongated aperture 22 extending in both a lateral and longitudinal direction across the surface of central portion of the plate, as best illustrated in Figure 7. The longitudinal direction extends parallel to the first edge 16 of the plate (the longest edge of the plate in this example). The longitudinal direction may extend in a direction which is perpendicular to the primary direction of flow of the heatant fluid.

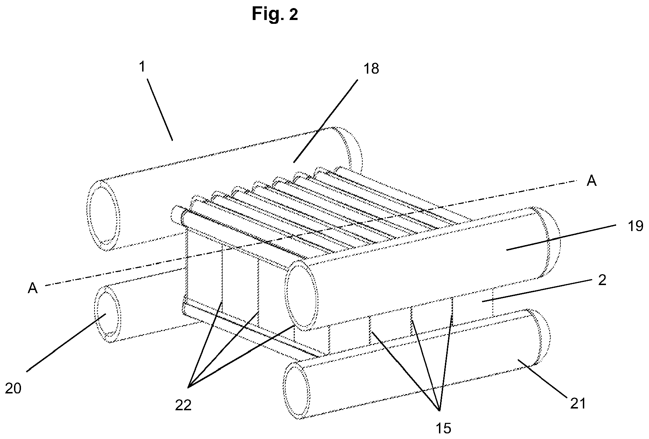

The stack of plates of Figure 1 are connected to four manifolds 18,19,20,21 to form a flat plate heat exchanger module 1 as illustrated in Figure 2. The module comprises a stack of heat exchanger plates 3, wherein each heat exchanger plate 3 is aligned with the adjacent heat exchanger plates and optional spacer plates 5 and intermediate end plates 4, to form a stack of plates positioned within two end plates 2,6.

The four manifolds 18,19,20,21 may also be referred to as headers such as inlet / outlet headers. The manifolds provide a fluid connection to the inlet 11,13 and outlet 12,14 ports (which may themselves be referred to as headers) to and from the heat exchanger module 1. Two manifolds are used for a first fluid stream and the other two manifolds are used for a second fluid stream. The first fluid stream may be a cold fluid stream, also referred to as a coolant, and the second fluid stream may be a hot fluid stream, which may also be referred to as a heatant. The manifolds 18,19,20,21 facilitate the supply and collection of the coolant and heatant to and from the heat exchanger module 1.

In Figure 2, the end plate 2 is depicted as having three elongated apertures 15 extending in a lateral direction. The spacer plates 5 of the example illustrated in Figure 2 have been used to create three elongated apertures 22 extending in a longitudinal direction.

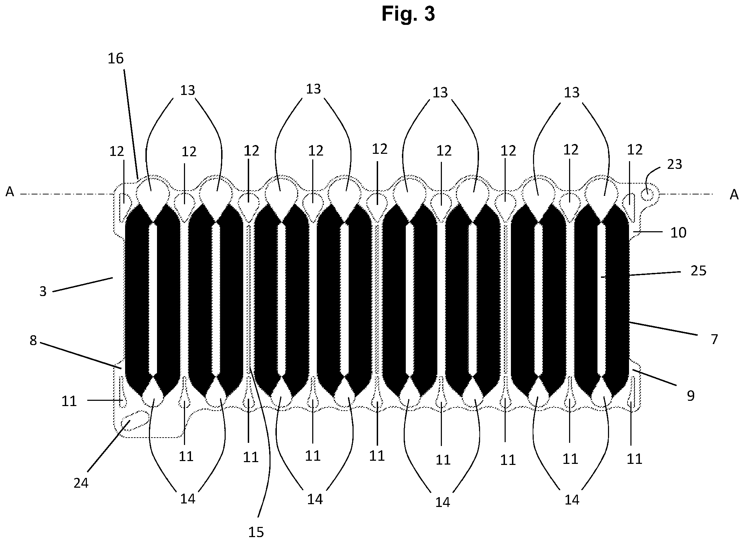

Fluid flow channels 7 are provided in the surface 8 of the metal foil sheet of the heat exchanger plates 3. This is illustrated in Figure 3. The channels are formed with a typical size of 10µm to 5mm. A first fluid flow path for the first fluid and a second fluid flow path for the second fluid is formed from the channels 7 in the stack of multiple heat exchanger plates 1, where each of the first and second fluid flow paths are in fluid isolation from one another. The fluid flow channels 7 extend in a generally lateral direction across the surface of the heat exchanger plate 3, directing a first or second fluid from the fluid inlet to the fluid outlet. The spacer plates 5, intermediate end plates 4, and end plates 2,6 of Figure 1 do not have fluid flow channels 7 in their surfaces.

The heat exchanger plates 3 in the illustrated example comprise header portions 9,10. The header portions provide inlet 11 and outlet 12 ports for a first fluid and inlet 13 and outlet 14 ports for a second fluid. Each of the heat exchanger plates 3 further comprises multiple elongated apertures 15 extending therethrough, where the elongated apertures 15 are in fluid isolation from the first and second fluid flow path. The elongated apertures 15 are located in the channel-free portions of the heat exchanger plate 3, such that the elongated apertures 15 do not intercept the flow path of the fluid. The elongated apertures 15 are in fluid isolation from the first and second fluid flow path. The elongated apertures 15 extend in the lateral direction which is normal to a first edge of the heat exchanger plate (which in this illustration is the longest side of the plate). The lateral direction may extend in a direction which is parallel to the primary direction of flow of the heatant fluid through the heat exchanger.

The fluid flow channels 7 may be formed by etching the surface 8 of the metal foil of the heat exchanger plate. The fluid flow channels 7 do not penetrate through the heat exchanger plate itself.

In the example shown in Figure 3, each of the heat exchanger plates 3 comprises three elongated apertures 15 although the number may depend on the configuration of the plate and its performance requirements. The elongated apertures extend entirely through the material of the heat exchanger plate 3 such that the elongated apertures are present on both sides of the heat exchanger plate 3.

In Figure 2, three elongated apertures are provided in each of the two end plates 2,6, and these elongated apertures 15 extend in a lateral direction across the surface of the end plate. The end plates 2,6 can comprise a metal foil sheet or a metal plate. In the illustrated example of Figure 1, the end plates do not have channels 7.

Figure 3 is a plan view of an exemplary heat exchanger plate 3 from Figure 1, comprising an individual foil sheet, which would lie in the plane of A-A as indicated in Figure 2. The foil sheet comprises header portions 9,10 located on two sides of the plate at the lateral edges. Header portions 9,10 comprise inlet 11 and outlet 12 ports for the cold fluid, also referred to as the coolant. Inlet 13 and outlet 14 ports are provided for the hot fluid, also referred to as the heatant. A coolant may enter the inlet port 11 at a relatively low temperature, where it can be heated by the heatant as it travels through the heat exchanger module 20. The coolant can exit the outlet port 12 at a higher temperature than it was at the inlet port 11. Conversely, the heatant may enter the inlet port 13 at a relatively high temperature and lose heat to the coolant as it travels through the heat exchanger, leaving the outlet port 14 at a lower temperature. The heat exchanger plates are stacked, and one side of the heat exchanger plate will provide a fluid flow path for the coolant, whilst the next side of the plate will provide a fluid flow path for the heatant.

The channels 7 of the heat exchanger plate 1 may be linear across the majority of the plate and turn at each side to join the inlet and outlet ports. The channels 7, in the example shown, are provided as two sets of channels which extend either side of a central reservation 25 in which no channels are formed. Each central reservation 25 is centrally positioned within at least two channels 7. The exact design of the channels 7 on the surface of the plate 8 may vary. The elongated apertures 15 may be linear and are positioned adjacent to the channels 7. The elongated apertures 15 do not intersect the fluid channels 7 or the inlet 11,13 or outlet 12,14 ports of the first and second fluid. The elongated apertures 15 are positioned in fluid isolation from the first and second fluid flow paths. The inlet 11,13 and outlet 12,14 ports may have a tear-drop shape, as illustrated in Figure 3. The inlet 11,13 and outlet 12,14 ports may not necessarily have a tear-drop shape, but could alternatively have a round, oblong or oval shape, for example. The inlet and outlet ports are located at the periphery of the plate, along the edge of the header portions 9, 10.

As illustrated in Figure 3, the elongated apertures 15 pass through the foil and extend in a lateral direction across the surface of heat exchanger plate. The elongated apertures 15 of Figure 3 extend in a direction which is normal to a first edge 16 (shown in Figure 1) of the heat exchanger plate. In the illustrated example, the first edge 16 of the foil sheet is the longest edge of the foil sheet.

In addition, Figure 3 illustrates the optional removal of excess material from around the exterior of the inlet 11,13 and outlet 12,14 ports. The two longest sides of the header portions 9,10 do not have straight edges, in this example. The material of the header portions 9,10 provide the outer wall for the inlet 11,13 and outlet 12,14 ports of the two fluid flow paths. The wall thickness of the inlet and outlet ports needs to be sufficient to contain the first and second fluid flowing through the inlet and outlet ports at the pressures which are likely to be encountered during operation of the heat exchanger (with a safety factor). The required wall thickness for a set pressure (or pressure range) can be calculated. In the illustrated example, surplus material which is in excess of the required wall thickness has been trimmed or removed from the plate. As a result of this, the edge of the header portion 9,10 of the heat exchanger plate is corrugated in this example, but may also be ridged, ribbed, serrated or castellated, such that the shape of the edge of the foil corresponds with the shape and positions of the inlet 11,13 and outlet 12,14 ports.

The heat exchanger plate 3 of Figure 3 also includes pin alignment slots 21,22 for the alignment of the plates prior to assembly of the module 20. The pin alignment slots 23,24 may be used to hold the heat exchanger plates 3, which comprise of metal foil sheets, in alignment before they are fixed in place (e.g. by diffusion bonding). The pin alignment slots 23,24 can assist with the alignment of the apertures 15,17 of adjacent heat exchanger plates 3, intermediate end plates 4, spacer plates 5, and end plates 2,6.

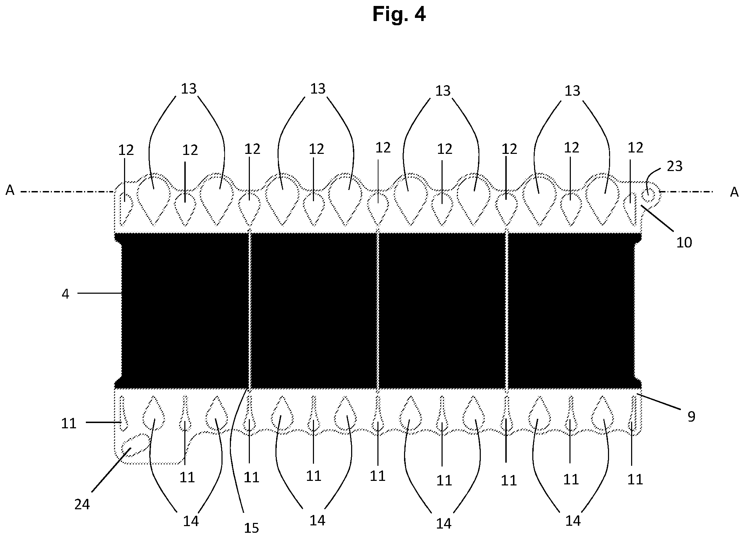

The intermediate end plate 4 of Figure 1 is illustrated in Figure 4. This plate would lie in the plane of A-A as indicated in Figure 2. The intermediate end plate 4 of Figure 4 may be a foil sheet or may be a metal plate. The intermediate end plate assists with providing a pressure tight seal with sufficient thickness to withstand high pressure fluid loads, particularly when diffusion bonded with adjacent plates. The intermediate end plate 4 comprises inlet ports 11 and outlet ports 12 for the coolant. Inlet ports 13 and outlet ports 14 are also provided for the heatant. In the example as illustrated in Figure 4, the intermediate end plate 4 comprises three elongated apertures which extend in a lateral direction across the surface of the plate. Pin alignment slots 23 and 24 are provided for alignment and fixing of the intermediate end plate 4 to other plates, such as the heat exchanger plates 3 and spacer plates 5.

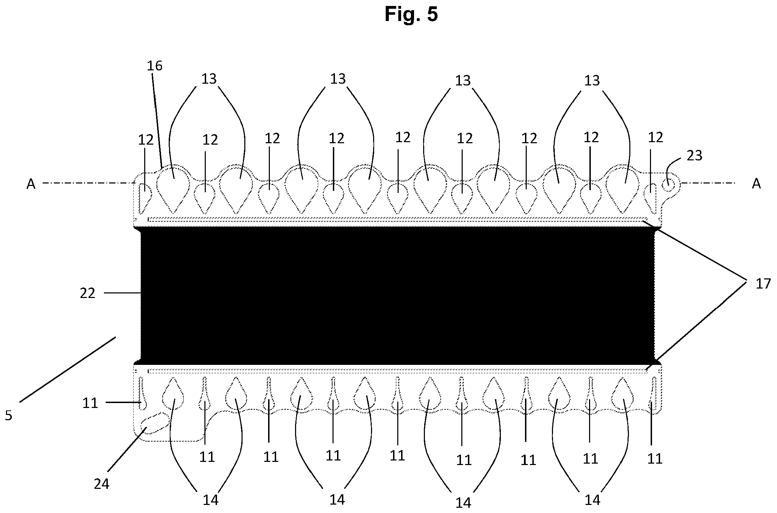

Figure 5 is a plan view of the spacer plate 5 of Figure 1, which would lie in the plane of A-A as indicated in Figure 2. The spacer plate 5 may be a foil sheet or may be a metal plate. The spacer plate 5 comprises inlet ports 11 and outlet ports 12 for the coolant. Inlet ports 13 and outlet ports 14 are also provided for the heatant. Pin alignment slots 23 and 24 are provided for alignment and fixing of the spacer plate 5 to other plates, such as the heat exchanger plates 1. The spacer plate 5 of Figure 5 does not have any channels for fluid flow.

An elongated aperture 17 extends across the spacer plate 5 in a longitudinal direction. The elongated aperture 17 may be linear as illustrated in Figure 5. The longitudinal direction in this example is parallel to a first edge 16 of the spacer plate 5, where the first edge 16 is the longest edge of the plate. The longitudinal direction extends in a direction which is perpendicular to the primary direction of flow of the heatant fluid. The elongated apertures 17 provide a gap allowing for material from the central portion of the spacer plate 5 to be removed by machining operations to form elongated aperture 22. As the metal spacer plate 5 is heated, the metal will naturally expand. The elongated aperture 22 which is formed in the same plane as the fluid flow provides a space within which the metal of the spacer plate 5 can expand or distort in a second direction without placing pressure on the surrounding elements of the heat exchanger. The elongated aperture 22 is positioned in fluid isolation from the first and second fluid flow path, such that the fluid inlets and outlets are not intersected by the elongated aperture 22. Without the elongated aperture 22, thermal expansion of the metal plate can place stress on the connections between the inlet 11,13 and outlet 12,14 ports and other connection points, such as the connection with the inlet and outlet collectors.

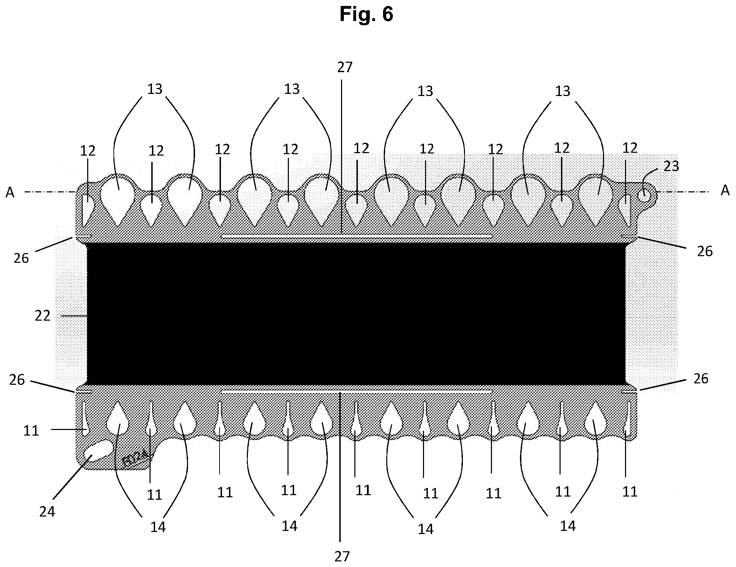

The image shown in Fig. 5 illustrates a spacer plate 5 with elongated apertures 17 for removing material. Figure 6 illustrates a spacer plate 5 with partially etched elongated apertures 27. The spacer plate 5 can be initially formed with partially etched elongated apertures 27 to maintain structural integrity during module assembly. After at least one spacer plate 5 has been diffusion bonded to adjacent plates, the length of the partially etched elongated aperture 27 can be extended by one of electrical discharge machining, drilling, laser or water jet cutting, using the pilot holes 26 to assist with achieving accurate positioning. The pilot holes 26 act as drilling datum after several plates have been diffusion bonded together. Preferably, the step of extending the length of the partially etched elongated aperture 27 to an elongated aperture is conducted after several plates have been diffusion bonded together.

Figure 7 illustrates a cross-section of a stack of intermediate end plates 4 and two spacer plates 5 after a machining process has been used to remove the central portion of the spacer plates to create an elongated aperture 22 in the same plane as the foils. The spacer plates create an elongated aperture 22 extending in a longitudinal direction through the stack of plates. This figure illustrates the assembly after an additional machining step has been performed to remove the material from the spacer plates 5 between each of the two elongated apertures 17 illustrated in Figure 5.

Figure 8 provides an isometric view of one end of the stack of plates illustrated in Figure 7. This illustrates an exemplary stack of heat exchanger plates 3, intermediate end plates 4 and spacer plates 5. In Figure 8, an elongated aperture 17 is shown extending through two spacer plates 5 in a longitudinal direction. The coolant outlet port 12 is also illustrated.

A method of manufacturing a flat plate heat exchanger is also provided, which involves etching at least one fluid flow channel 7 on the surface of at least one metal foil sheet, where the metal foil sheet forms a heat exchanger plate 3. At least two heat exchanger plates 3 are stacked adjacent to one another, such that the at least two heat exchanger plates 3 provide a first fluid flow path for a first fluid and a second fluid flow path for a second fluid, where each of the fluid flow paths are in fluid isolation from one another. At least one inlet 11 and at least one outlet 12 is provided for the first fluid; and at least one inlet 13 and at least one outlet 14 is provided for the second fluid. Etching or laser cutting can be used to create at least one elongated aperture 15 extending in a lateral direction across the surface of at least one heat exchanger plate 3, where the elongated aperture 15 is created in a position which is in fluid isolation from the first and second fluid flow paths. The at least two heat exchanger plates 3 are diffusion bonded together and arranged between two end plates 2,6, to form a module 1.

Preferably chemical etching is used to create the fluid flow channels 7, however, the channels 7 could also be formed by water jet or laser cutting, stamping or moulding.

The elongated aperture 15 does not intersect the flow path of either the first or second fluid. This elongated aperture 15 provides strain relief to the foil when the foil distorts due to exposure to a temperature gradient. The elongated aperture may also be etched, drilled, or cut through other foil sheets or metal plates which are present in the heat exchanger module, which may include spacer plates 5 and end plates 2,6.

At least one inlet 11 and one outlet 12 is provided for the first fluid, and at least one inlet 13 and one outlet 14 is provided for the second fluid. These inlets 11,13 and outlets 12,14 can be etched, drilled, or otherwise machined into the metal foil of the heat exchanger plate 3.

Additional plates which are not heat exchanger plates can be stacked adjacent to the heat exchanger plates 3. These additional plates may not comprise fluid flow channels. The additional plates may be spacer plates 5, intermediate end plates 4 or end plates 2,6. The additional plates may comprise inlets 11,13 and outlets 12,14 for the first and second fluids. The additional plates may be etched to provide at least one elongated aperture extending in a lateral 15 and/or a longitudinal 17,22 direction. The additional plates may comprise a foil sheet or may comprise a metal plate.

The method of manufacturing a flat plate heat exchanger module may comprise a step of providing at least one intermediate end plate 4 which is stacked adjacent to the heat exchanger plates 3. The intermediate end plate 4 may comprise a metal plate or a metal foil sheet.

The method of manufacturing a flat plate heat exchanger module may comprise etching at least one elongated aperture into at least one heat exchanger plate 3 in a lateral direction 15 across the surface of the heat exchanger plate.

Figure 6 is a plan view of one of the spacer plates 5 of Figure 1 formed from a foil sheet. This figure illustrates a partly etched elongated aperture 27 extending in a longitudinal direction across the surface of the plate. Pilot holes 26 are etched in alignment with the elongated aperture 27. After at least one spacer plate 5 has been diffusion bonded to adjacent plates, the length of the partially etched elongated aperture 27 can be extended by one of electrical discharge machining, drilling, laser or water jet cutting, using the pilot holes 26 to assist with achieving accurate positioning. The pilot holes 26 act as drilling datum after several plates have been diffusion bonded together. Preferably, the step of extending the length of the partially etched elongated aperture 27 is conducted after several plates have been diffusion bonded together. Once this elongated aperture has been extended across the full width of the heat exchanger, another machining process can be used to remove the material of the spacer plate 5 between the elongated apertures located on opposite sides of the heat exchanger. This creates an aperture 22 within the heat exchanger in the same plane as the foils.

Figures 2-6 also illustrate the optional removal of excess material from the outer edge of the header portion 9 around the inlet 11,13 and outlet 12,14 ports. The longest edge 16 of the header is not straight, as excess material which is not required for containing the fluid flow through the inlet or outlet ports is removed or trimmed from the header of the spacer plate 5 during the manufacturing process. This results in a substantial improvement in the thermal stresses experienced by the heat exchanger module during use.

As discussed above, the heat exchanger plates 3, spacer plates 5, intermediate end plates 4, and/or end plates 2,6 may comprise header portions 9,10, and the header portions may be etched to provide inlet 11,13 and outlet 12,14 ports for the first and second fluid. Excess material surrounding the inlet 11,13 and outlet ports 12,14 may be removed from the header portions 9,10, such that the edge 16 of the header portions are corrugated, ridged, ribbed, serrated or castellated, such that the shape of the edge of the foil corresponds with the shape and positions of the inlet and outlet ports. The excess material may be removed by etching. Alternatively, the plates may be pre-formed with a corrugated edge, e.g. by moulding or stamping.

At least two heat exchanger plates 3 may be stacked adjacent to each other, where each plate comprises at least one elongated aperture 15 extending in a lateral direction across the surface of the heat exchanger plate; the apertures 15 of each heat exchanger plate 3 can be aligned; and the heat exchanger plates can be diffusion bonded together.

The method of manufacturing a flat plate heat exchanger module may include a step of aligning a stack of heat exchanger plates 3 with one or more spacer plates 5 and optionally with one or more intermediate end plates 4. The method may further include a step of aligning a stack of heat exchanger plates 3 with one or more spacer plates 5. The spacer plates 5, and/or the intermediate end plates 4 may comprise a metal foil or a thin metal plate. The method of manufacturing a flat plate heat exchanger module can include a step of aligning a stack of heat exchanger plates 3 with one or more spacer plates 5, intermediate end plates 4 within two end plates 2,6.

A stack of heat exchanger plates 3 may be diffusion bonded together with one or more spacer plates 5 and optionally one or more intermediate end plates 4. Alternatively, one or more spacer plates 5 may be diffusion bonded together with one or more intermediate end plates 4. Once the stack of plates is diffusion bonded together the plates form a heat exchanger module 1 which is effectively a block of material, comprising internal apertures and fluid flow channels.

Where the heat exchanger module contains spacer plates 5, the pilot holes 26 in those spacer plates may be drilled or machined to provide a continuous elongated aperture through the module. This then allows insertion of a tool (e.g. EDM wire) to remove the material between the partially etched elongated apertures 17 on opposite sides of the heat exchanger plate. The elongated aperture 17 provides a gap which allows the central portion of the spacer plate 5 to be removed by machining operations. This creates a planar aperture 22 within the heat exchanger in the same plane as the heat exchanger plate.

The method of manufacturing a flat plate heat exchanger may include a step of aligning the elongated apertures 15 of at least two heat exchanger plates 3 and at least one intermediate end plate 4 with each other before the plates 3,4 are diffusion bonded to each other. The method may include a step of forming a stack of spacer plates 5 and intermediate end plates 4, aligning the elongated apertures 15 in the stack of intermediate end plates 4 and diffusion bonding the spacer plates 5 to the intermediate end plates 4, for positioning alongside the heat exchanger plates 3.

## Claims

1. A flat plate heat exchanger module (1) comprising;
a stack of heat exchanger plates (3),
wherein each heat exchanger plate comprises a metal foil sheet,
wherein at least one fluid flow channel is provided in the surface of each heat exchanger plate;
at least one inlet and at least one outlet for a first fluid;
at least one inlet and at least one outlet for a second fluid;
wherein a first fluid flow path for the first fluid and a second fluid flow path for the second fluid is formed from the channels in the stack of multiple heat exchanger plates, wherein each of the first and second fluid flow paths are in fluid isolation from one another; the flat plate heat exchanger module being **characterized in that**
at least one of the heat exchanger plates further comprises at least one elongated aperture (15) extending across the surface of the heat exchanger plate, wherein the at least one elongated aperture is in fluid isolation from the first and second fluid flow paths, and
where the at least one elongated aperture extends across at least 50% of the plate in a lateral direction across the surface of the heat exchanger plate,
where the lateral direction is parallel to the direction of flow of the first and second fluid flow paths.

2. A flat plate heat exchanger module according to any preceding claim, where at least one of the heat exchanger plates comprises at least two elongated apertures which extend in a lateral direction across the surface of the heat exchanger plate, and
where the at least two elongated apertures may be arranged at regularly spaced intervals in the surface of the heat exchanger plate.

3. A flat plate heat exchanger module according to any preceding claim, further comprising at least one spacer plate, where the spacer plate comprises at least one elongated aperture, and where the spacer plate may comprise a metal foil sheet or a metal plate.

4. A flat plate heat exchanger module according to Claim 3, where at least one elongated aperture extends in a longitudinal direction across the surface of the spacer plate, where the longitudinal direction is perpendicular to the primary direction of flow of the heatant fluid, and where at least one elongated aperture may extend across at least 50% of the width of the spacer plate, and where at least one elongated aperture may extend in a longitudinal direction across the entire width of the spacer plate.

5. A flat plate heat exchanger module according to Claims 3 or 4, where the spacer plate comprises at least two elongated apertures which extend in a longitudinal direction across the surface of the plate.

6. A flat plate heat exchanger module according to any preceding claim, comprising an intermediate end plate, where the intermediate end plate comprises at least one elongated aperture which extends in a lateral direction across the surface of the plate.

7. A flat plate heat exchanger module according to Claim 6, where the intermediate end plate comprises at least three elongated apertures which extend in a lateral direction across the surface of the plate, and
where at least one elongated aperture may extend across at least 50% of the plate in a lateral direction.

8. A flat plate heat exchanger module according to any preceding claim, comprising at least two diffusion bonded heat exchanger plates positioned between two end plates.

9. A method of manufacturing a flat plate heat exchanger module according to claim 1 comprising the following steps:
- providing at least one fluid flow channel on the surface of at least one metal foil sheet, where the metal foil sheet forms a heat exchanger plate;
- stacking at least two heat exchanger plates adjacent to one another, such that the at least two heat exchanger plates provide a first fluid flow path for a first fluid and a second fluid flow path for a second fluid, where each of the fluid flow paths are in fluid isolation from one another;
- providing at least one inlet and at least one outlet for the first fluid;
- providing at least one inlet and at least one outlet for the second fluid;
- arranging the plurality of diffusion bonded heat exchanger plates between two end plates, to form a module;
- diffusion bonding a plurality of heat exchanger plates together;
- providing at least one elongated aperture extending in a lateral direction across the surface of at least one heat exchanger plate, where the elongated aperture is in fluid isolation from the first and second fluid flow paths,
- where at least one elongated aperture is etched into at least one heat exchanger plate in a lateral direction across the surface of the heat exchanger plate, and where the elongated apertures extend across at least 50% of the plate in a lateral direction across the surface of the heat exchanger plate.

10. A method of manufacturing a flat plate heat exchanger module according to Claim 9, where the at least one fluid flow channel is etched on the surface of at least one metal foil sheet.

11. A method of manufacturing a flat plate heat exchanger module according to Claim 9 or Claim 10, comprising a step of providing at least one spacer plate which is stacked adjacent to the heat exchanger plates, where at least one elongated aperture is etched into the spacer plate, and where the spacer plate may comprise a metal plate, or a metal foil sheet.

12. A method of manufacturing a flat plate heat exchanger module according to Claim 11, where at least one elongated aperture is etched into at least one spacer plate in a longitudinal direction across the surface of a spacer plate.

13. A method of manufacturing a flat plate heat exchanger module according to Claims 11 or 12, comprising the use of electrical discharge machining to create at least one elongated aperture in at least one spacer plate after the diffusion bonding step.

14. A method of manufacturing a flat plate heat exchanger module according to any one of Claims 9 to 13, comprising aligning at least two elongated apertures in a stack of plates with each other before the plates are diffusion bonded to each other.

15. A method of manufacturing a flat plate heat exchanger module according to any of Claims 9 to 14, comprising:
- stacking at least two heat exchanger plates adjacent to each other, where each plate comprises at least one elongated aperture extending in a lateral direction across the surface of the heat exchanger plate;
- aligning the apertures of the heat exchanger plates; and
- diffusion bonding the heat exchanger plates together.

## Patentansprüche

1. Flachplattenwärmetauschermodul (1), umfassend:
einen Stapel von Wärmetauscherplatten (3),
wobei jede Wärmetauscherplatte ein Metallfolienblech umfasst,
wobei mindestens ein Fluidströmungskanal auf der Oberfläche jeder Wärmetauscherplatte bereitgestellt ist;
mindestens einen Einlass und mindestens einen Auslass für ein erstes Fluid;
mindestens einen Einlass und mindestens einen Auslass für ein zweites Fluid;
wobei ein erster Fluidströmungsweg für das erste Fluid und ein zweiter Fluidströmungsweg für das zweite Fluid aus den Kanälen in dem Stapel aus mehreren Wärmetauscherplatten gebildet werden,
wobei jeder der ersten und zweiten Fluidströmungswege in Fluidisolation voneinander sind;
wobei das Flachplattenwärmetauschermodul **dadurch gekennzeichnet ist, dass**
mindestens eine der Wärmetauscherplatten ferner mindestens eine längliche Apertur (15) umfasst, die sich über die Oberfläche der Wärmetauscherplatte erstreckt, wobei die mindestens eine längliche Apertur in Fluidisolation von dem ersten und zweiten Fluidströmungsweg ist, und
wobei sich die mindestens eine längliche Apertur über mindestens 50 % der Platte in einer seitlichen Richtung über die Oberfläche der Wärmetauscherplatte erstreckt,
wobei die seitliche Richtung parallel zur Strömungsrichtung des ersten und des zweiten Fluidströmungswegs ist.

2. Flachplattenwärmetauschermodul nach einem der vorhergehenden Ansprüche, wobei mindestens eine der Wärmetauscherplatten mindestens zwei längliche Aperturen umfasst, die sich in seitlicher Richtung über die Oberfläche der Wärmetauscherplatte erstrecken, und
wobei die mindestens zwei länglichen Aperturen in regelmäßig beabstandeten Intervallen in der Oberfläche der Wärmetauscherplatte angeordnet sein können.

3. Flachplattenwärmetauschermodul nach einem der vorhergehenden Ansprüche, ferner umfassend mindestens eine Distanzplatte, wobei die Distanzplatte mindestens eine längliche Apertur umfasst und wobei die Distanzplatte ein Metallfolienblech oder eine Metallplatte umfassen kann.

4. Flachplattenwärmetauschermodul nach Anspruch 3, wobei sich mindestens eine längliche Apertur in einer Längsrichtung über die Oberfläche der Distanzplatte erstreckt, wobei die Längsrichtung senkrecht zur Hauptströmungsrichtung des Wärmeträgerfluids ist und wobei sich mindestens eine längliche Apertur über mindestens 50 % der Breite der Distanzplatte erstrecken kann, und wobei sich mindestens eine längliche Apertur in einer Längsrichtung über die gesamte Breite der Distanzplatte erstrecken kann.

5. Flachplattenwärmetauschermodul nach Anspruch 3 oder 4, wobei die Distanzplatte mindestens zwei längliche Aperturen umfasst, die sich in einer Längsrichtung über die Oberfläche der Platte erstrecken.

6. Flachplattenwärmetauschermodul nach einem der vorhergehenden Ansprüche, umfassend eine Zwischenendplatte, wobei die Zwischenendplatte mindestens eine längliche Apertur umfasst, die sich in einer seitlichen Richtung über die Oberfläche der Platte erstreckt.

7. Flachplattenwärmetauschermodul nach Anspruch 6, wobei die Zwischenendplatte mindestens drei längliche Aperturen umfasst, die sich in einer seitlichen Richtung über die Oberfläche der Platte erstrecken, und
wobei sich mindestens eine längliche Apertur in einer seitlichen Richtung über mindestens 50 % der Platte erstrecken kann.

8. Flachplattenwärmetauschermodul nach einem der vorhergehenden Ansprüche, umfassend mindestens zwei diffusionsgebundene Wärmetauscherplatten, die zwischen zwei Endplatten positioniert sind.

9. Verfahren zum Herstellen eines Flachplattenwärmetauschermoduls nach Anspruch 1, umfassend die folgenden Schritte:
- Bereitstellen mindestens eines Fluidströmungskanals auf der Oberfläche mindestens eines Metallfolienblechs, wobei das Metallfolienblech eine Wärmetauscherplatte bildet;
- Stapeln von mindestens zwei einander benachbarte Wärmetauscherplatten, sodass die mindestens zwei Wärmetauscherplatten einen ersten Fluidströmungsweg für ein erstes Fluid und einen zweiten Fluidströmungsweg für ein zweites Fluid bereitstellen, wobei jeder der Fluidströmungswege in Fluidisolation voneinander ist;
- Bereitstellen mindestens eines Einlasses und mindestens eines Auslasses für das erste Fluid;
- Bereitstellen mindestens eines Einlasses und mindestens eines Auslasses für das zweite Fluid;
- Anordnen der Vielzahl von diffusionsgebundenen Wärmetauscherplatten zwischen zwei Endplatten, um ein Modul zu bilden;
- Diffusionsbinden einer Vielzahl von Wärmetauscherplatten aneinander;
- Bereitstellen mindestens einer länglichen Apertur, die sich in seitlicher Richtung über die Oberfläche mindestens einer Wärmetauscherplatte erstreckt, wobei die längliche Apertur in Fluidisolation von dem ersten und dem zweiten Fluidströmungsweg ist,
- wobei mindestens eine längliche Apertur in mindestens eine Wärmetauscherplatte in seitlicher Richtung über die Oberfläche der Wärmetauscherplatte geätzt ist und wobei sich die länglichen Aperturen über mindestens 50 % der Platte in seitlicher Richtung über die Oberfläche der Wärmetauscherplatte erstrecken.

10. Verfahren zum Herstellen eines Flachplattenwärmetauschermoduls nach Anspruch 9, wobei der mindestens eine Fluidströmungskanal auf die Oberfläche von mindestens einem Metallfolienblech geätzt wird.

11. Verfahren zum Herstellen eines Flachplattenwärmetauschermoduls nach Anspruch 9 oder Anspruch 10, umfassend einen Schritt des Bereitstellens mindestens einer Distanzplatte, die benachbart zu den Wärmetauscherplatten gestapelt ist, wobei mindestens eine längliche Apertur in die Distanzplatte geätzt ist und wobei die Distanzplatte eine Metallplatte oder ein Metallfolienblech umfassen kann.

12. Verfahren zum Herstellen eines Flachplattenwärmetauschermoduls nach Anspruch 11, wobei mindestens eine längliche Apertur in mindestens eine Distanzplatte in einer Längsrichtung über die Oberfläche einer Distanzplatte geätzt wird.

13. Verfahren zum Herstellen eines Flachplattenwärmetauschermoduls nach Anspruch 11 oder 12, umfassend die Verwendung von elektroerosiver Bearbeitung zum Erzeugen mindestens einer länglichen Apertur in mindestens einer Distanzplatte nach dem Diffusionsbindungsschritt.

14. Verfahren zum Herstellen eines Flachplattenwärmetauschermoduls nach einem der Ansprüche 9 bis 13, umfassend das Ausrichten von mindestens zwei länglichen Aperturen in einem Plattenstapel miteinander, bevor die Platten miteinander diffusionsverbunden werden.

15. Verfahren zum Herstellen eines Flachplattenwärmetauschermoduls nach einem der Ansprüche 9 bis 14, umfassend:
- Stapeln von mindestens zwei einander benachbarten Wärmetauscherplatten, wobei jede Platte mindestens eine längliche Apertur umfasst, die sich in seitlicher Richtung über die Oberfläche der Wärmetauscherplatte erstreckt;
- Ausrichten der Aperturen der Wärmetauscherplatten; und
- Diffusionsbinden der Wärmetauscherplatten aneinander.

## Revendications

1. Module d'échangeur thermique à plaques plates (1) comprenant :
un empilement de plaques d'échangeur thermique (3),
dans lequel chaque plaque d'échangeur thermique comprend une feuille métallique,
dans lequel au moins un canal de flux de fluide est disposé dans la surface de chaque plaque d'échangeur thermique ;
au moins une entrée et au moins une sortie pour un premier fluide ;
au moins une entrée et au moins une sortie pour un deuxième fluide ;
dans lequel un premier trajet de flux de fluide pour le premier fluide et un deuxième trajet de flux de fluide pour le deuxième fluide sont formés à partir des canaux dans l'empilement de multiples plaques d'échangeur thermique,
dans lequel chacun des premier et deuxième trajets de flux de fluide sont en isolation fluidique l'un par rapport à l'autre ;
le module d'échangeur thermique à plaques plates étant **caractérisé en ce que**
au moins l'une des plaques d'échangeur thermique comprend en outre au moins une ouverture allongée (15) s'étendant à travers la surface de la plaque d'échangeur thermique, dans laquelle l'au moins une ouverture allongée est en isolation fluidique par rapport au premier et deuxième trajets de flux de fluide, et
dans laquelle l'au moins une ouverture allongée s'étend à travers au moins 50 % de la plaque dans une direction latérale à travers la surface de la plaque d'échangeur thermique,
dans laquelle la direction latérale est parallèle à la direction de flux du premier et du deuxième trajets de flux de fluide.

2. Module d'échangeur thermique à plaques plates selon l'une quelconque revendication précédente, dans lequel au moins l'une des plaques d'échangeur thermique comprend au moins deux ouvertures allongées qui s'étendent dans une direction latérale à travers la surface de la plaque d'échangeur thermique, et
dans laquelle les au moins deux ouvertures allongées peuvent être agencées à des intervalles régulièrement espacés dans la surface de la plaque d'échangeur thermique.

3. Module d'échangeur thermique à plaques plates selon l'une quelconque revendication précédente, comprenant en outre au moins une plaque d'espacement, dans lequel la plaque d'espacement comprend au moins une ouverture allongée, et dans lequel la plaque d'espacement peut comprendre une feuille métallique ou une plaque métallique.

4. Module d'échangeur thermique à plaques plates selon la revendication 3, dans lequel au moins une ouverture allongée s'étend dans une direction longitudinale à travers la surface de la plaque d'espacement, dans laquelle la direction longitudinale est perpendiculaire à la direction primaire de flux du fluide caloporteur, et dans laquelle au moins une ouverture allongée peut s'étendre à travers au moins 50 % de la largeur de la plaque d'espacement, et dans laquelle au moins une ouverture allongée peut s'étendre dans une direction longitudinale à travers la largeur totale de la plaque d'espacement.

5. Module d'échangeur thermique à plaques plates selon les revendications 3 ou 4, dans lequel la plaque d'espacement comprend au moins deux ouvertures allongées qui s'étendent dans une direction longitudinale à travers la surface de la plaque.

6. Module d'échangeur thermique à plaques plates selon l'une quelconque revendication précédente, comprenant une plaque d'extrémité intermédiaire, dans lequel la plaque d'extrémité intermédiaire comprend au moins une ouverture allongée qui s'étend dans une direction latérale à travers la surface de la plaque.

7. Module d'échangeur thermique à plaques plates selon la revendication 6, dans lequel la plaque d'extrémité intermédiaire comprend au moins trois ouvertures allongées qui s'étendent dans une direction latérale à travers la surface de la plaque, et
dans laquelle au moins une ouverture allongée peut s'étendre à travers au moins 50 % de la plaque dans une direction latérale.

8. Module d'échangeur thermique à plaques plates selon l'une quelconque revendication précédente, comprenant au moins deux plaques d'échangeur thermique soudées par diffusion positionnées entre deux plaques d'extrémité.

9. Procédé de fabrication d'un module d'échangeur thermique à plaques plates selon la revendication 1 comprenant les étapes suivantes :
- la fourniture d'au moins un canal de flux de fluide sur la surface d'au moins une feuille métallique, dans laquelle la feuille métallique forme une plaque d'échangeur thermique ;
- l'empilement d'au moins deux plaques d'échangeur thermique adjacentes l'une à l'autre, de telle sorte que les au moins deux plaques d'échangeur thermique fournissent un premier trajet de flux de fluide pour un premier fluide et un deuxième trajet de flux de fluide pour un deuxième fluide, dans lequel chacun des trajets de flux de fluides sont en isolation fluidique l'un par rapport à l'autre ;
- la fourniture d'au moins une entrée et d'au moins une sortie pour le premier fluide ;
- la fourniture d'au moins une entrée et d'au moins une sortie pour le deuxième fluide ;
- l'agencement de la pluralité de plaques d'échangeur thermique soudées par diffusion entre deux plaques d'extrémité pour former un module ;
- le soudage par diffusion d'une pluralité de plaques d'échangeur thermique ensemble ;
- la fourniture d'au moins une ouverture allongée s'étendant dans une direction latérale à travers la surface d'au moins une plaque d'échangeur thermique, dans laquelle l'ouverture allongée est en isolation fluidique par rapport au premier et deuxième trajets de flux de fluide,
- dans lequel au moins une ouverture allongée est gravée dans au moins une plaque d'échangeur thermique dans une direction latérale à travers la surface de la plaque d'échangeur thermique, et dans lequel les ouvertures allongées s'étendent à travers au moins 50 % de la plaque dans une direction latérale à travers la surface de la plaque d'échangeur thermique.

10. Procédé de fabrication d'un module d'échangeur thermique à plaques plates selon la revendication 9, dans lequel l'au moins un canal de flux de fluide est gravé sur la surface d'au moins une feuille métallique.

11. Procédé de fabrication d'un module d'échangeur thermique à plaques plates selon la revendication 9 ou la revendication 10, comprenant une étape de fourniture d'au moins une plaque d'espacement qui est empilée adjacente aux plaques d'échangeur thermique, dans lequel au moins une ouverture allongée est gravée dans la plaque d'espacement, et dans lequel la plaque d'espacement peut comprendre une plaque métallique ou une feuille métallique.

12. Procédé de fabrication d'un module d'échangeur thermique à plaques plates selon la revendication 11, dans lequel au moins une ouverture allongée est gravée dans au moins une plaque d'espacement dans une direction longitudinale à travers la surface d'une plaque d'espacement.

13. Procédé de fabrication d'un module d'échangeur thermique à plaques plates selon les revendications 11 ou 12, comprenant l'utilisation d'un usinage par décharge électrique pour créer au moins une ouverture allongée dans au moins une plaque d'espacement après l'étape de soudage par diffusion.

14. Procédé de fabrication d'un module d'échangeur thermique à plaques plates selon l'une quelconque des revendications 9 à 13, comprenant l'alignement d'au moins deux ouvertures allongées dans un empilement de plaques l'une avec l'autre avant que les plaques ne soient soudées par diffusion les unes aux autres.

15. Procédé de fabrication d'un module d'échangeur thermique à plaques plates selon l'une quelconque des revendications 9 à 14, comprenant :
- l'empilement d'au moins deux plaques d'échangeur thermique adjacentes l'une à l'autre, dans lequel chaque plaque comprend au moins une ouverture allongée s'étendant dans une direction latérale à travers la surface de la plaque d'échangeur thermique ;
- l'alignement des ouvertures des plaques d'échangeur thermique ; et
- le soudage par diffusion des plaques d'échangeur thermique ensemble.
